# FASCICULE DE BREVET EUROPEEN

(11) **EP 1 591 688 B1**
(45) Date de publication et mention de la délivrance du brevet: **05.10.2011**
(21) Numéro de dépôt: 05008485.4
(22) Date de dépôt: 19.04.2005
(51) Int. Cl.: F16D 65/097, F16D 55/226

(54) **Elément destiné à être interposé entre un piston de frein à disque et un patin de frein, et frein a disque comportant un étrier comportant un tel élément**
Zwischen Kolben und Bremsbelagträgerplatte einer Scheibenbremse eingesetzes Element, und Bremsscheibe mit einem solchen Element
Device to be placed between a piston and a brake pad of a disc brake, and disc brake comprising said device

(30) Priorité: 29.04.2004 FR 0404611
(43) Date de publication de la demande: 02.11.2005
(73) Titulaire: ROBERT BOSCH GMBH, 70442 Stuttgart (DE)
(72) Inventeur: Prades, Xavier, 49125 Tierce (FR); Plessis, David, 49480 St Sylvain d'Anjou (FR); Bonnec, Jean-Louis, 49130 Les Ponts de Ce (FR); Vinck, Jan, 49250 Beaufort en Vallee (FR); Audinay, Daniel, 49000 Angers (FR); Champion, Pascal, 49240 Avrille (FR)
(74) Mandataire: Hurwic, Aleksander Wiktor

(56) Documents cités:
- EP-A- 0 322 530
- DE-A- 4 007 721
- GB-A- 2 018 373
- GB-A- 2 129 511

## Description

L'invention concerne un frein à disque de véhicule automobile.

L'invention concerne plus particulièrement un frein à disque de véhicule automobile, du type qui comporte un étrier de frein susceptible d'appliquer un patin de frein sur une face d'un disque de frein, du type dans lequel l'étrier comporte au moins un piston axial dont une extrémité d'appui est susceptible de solliciter une face d'appui du patin de frein pour serrer une face de friction opposée dudit patin contre le disque lors d'un freinage, et du type dans lequel chacune des extrémités transversales opposées du patin est montée coulissante avec jeu dans une glissière associée d'une chape de l'étrier par l'intermédiaire d'un ressort à lame interposé entre ladite extrémité transversale et ladite glissière associée.

On connaît de nombreux exemples de frein à disque de ce type.

Conventionnellement, la face d'appui du patin comporte un revêtement insonorisant qui est destiné à isoler thermiquement le piston du patin de frein pour éviter que les calories produites par le serrage du patin contre le disque lors du freinage ne soient transmises au piston de l'étrier, et, par son intermédiaire, au liquide de freinage. Ce revêtement présente aussi des caractéristiques d'isolation phonique.

II est connue de proposer de nouveaux types d'étrier de frein, du type de celui décrit précédemment, dans lesquels le patin est monté coulissant dans la glissière avec interposition de ressorts à lames,. Ces étriers sont sensés être plus silencieux que les étriers conventionnels. En effet, les ressorts à lames sont destinés à réduire les vibrations qui existent entre le patin de frein et l'étrier en permettant une certaine liberté de rotation du patin de frein dans l'étrier.

Un problème se pose toutefois du fait du contact entre le piston et le patin de frein. En effet, on a constaté qu'à l'usage, le piston à tendance à pénétrer le revêtement d'isolation de la face d'appui du patin de frein et devient de ce fait solidaire dudit revêtement, et donc du patin de frein, ce qui empêche alors ledit patin d'avoir la liberté de mouvement désirée.

Le document GB 2 129 511 A montre un élément d'après le préambule de la revendication 1.

Pour remédier à cet inconvénient, l'invention propose un frein à disque dans lequel le piston est découplé du patin de frein. Dans ce but, l'invention propose un élément destiné à être interposé entre une extrémité d'appui d'un piston de frein à disque et une face d'appui d'un patin de frein, que l'élément étant monté mobile par rapport au piston pour permettre un déplacement du patin de frein lors du freinage afin de limiter les bruits de freinage, l'élément mobile comporte une rondelle destinée à être agencée sur l'extrémité d'appui annulaire du piston,
l'élément mobile comporte au moins trois pattes destinées à s'étendre au contact d'une portée sensiblement cylindrique du piston pour assurer le guidage de la rondelle, caractérisé en ce que chaque patte comporte une partie intermédiaire élastique en forme de "S" destiné à être comprise dans un plan sensiblement tangent au piston pour permettre une rotation de la rondelle sur l'extrémité d'appui du piston, et en ce que chaque patte comporte une seconde extrémité comportant une touche destiné à être en contact avec la portée cylindrique du piston.

L'invention a également pour objet un élément, caractérisé en ce que chaque patte comporte une première extrémité qui la lie au bord intérieur d'un perçage de la rondelle et qui s'étend vers l'intérieur de l'alésage du piston tubulaire.

L'invention a également pour objet un élément, caractérisé en ce que la portée sensiblement cylindrique est agencée à la périphérie extérieure du piston tubulaire et en ce que chaque patte comporte une première extrémité qui la lie au bord extérieur périphérique de la rondelle et qui s'étend vers l'extérieur de la périphérie du piston tubulaire.

L'invention a également pour objet un élément caractérisé en ce que chaque patte comporte une partie intermédiaire élastique rectiligne qui est comprise dans un plan radial et qui est destinée à fléchir pour permettre un glissement déterminé de la rondelle sur l'extrémité d'appui du piston, et en ce que chaque patte comporte une seconde extrémité comportant une touche destinée à être en contact avec la portée cylindrique du piston.

L'invention a principalement pour objet un frein à disque de véhicule automobile, du type qui comporte un étrier de frein susceptible d'appliquer un patin de frein sur une face d'un disque de frein, du type dans lequel l'étrier comporte au moins un piston axial dont une extrémité d'appui est susceptible de solliciter une face d'appui du patin de frein pour serrer une face de friction opposée dudit patin contre le disque lors d'un freinage, et du type dans lequel chacune des extrémités transversales opposées du patin est montée coulissante avec jeu dans une glissière associée d'une chape de l'étrier par l'intermédiaire d'un ressort à lame interposé entre ladite extrémité transversale et ladite glissière associée, caractérisé en ce qu'il comporte un élément selon l'une quelconque des revendications précédentes, ledit élément étant interposé entre l'extrémité d'appui du piston et la face d'appui du patin de frein pour permettre un déplacement du patin de frein lors du freinage à l'encontre d'au moins un des ressorts afin de limiter les bruits de freinage.

L'invention a également pour objet un frein à disque caractérisé en ce que le piston comporte une portée sensiblement cylindrique est constituée d'une partie de l'alésage du piston tubulaire.

L'invention a également pour objet un frein à disque, caractérisé en ce que la portée cylindrique du piston comporte des dents asymétriques qui sont destinées à coopérer avec les secondes extrémités formant touches de contact des pattes pour former un cliquet ne permettant la rotation de la rondelle que dans un sens déterminé et selon un pas déterminé.

L'invention a également pour objet un frein à disque caractérisé en ce que l'élément mobile est fixé à la face d'appui du patin de frein.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une partie d'un frein à disque ;
- la figure 2 est une vue en coupe d'un piston d'un étrier muni de son élément mobile de type connu ;
- la figure 3 est une vue en perspective de l'élément tournant de la figure 2 ;
- la figure 4 est une vue une coupe d'un piston d'un étrier muni de son élément mobile selon un premier mode de réalisation de l'invention ;
- la figure 5 est une vue perspective du piston de la figure 4 ;
- la figure 6 est une vue en perspective d'un piston d'un étrier muni de son élément mobile selon un deuxième mode de réalisation de l'invention ;
- la figure 7 est une en perspective de détail du piston de la figure 6.

Dans la description qui va suivre, des chiffres de référence identiques désignent des pièces identiques ou ayant des fonctions similaires.

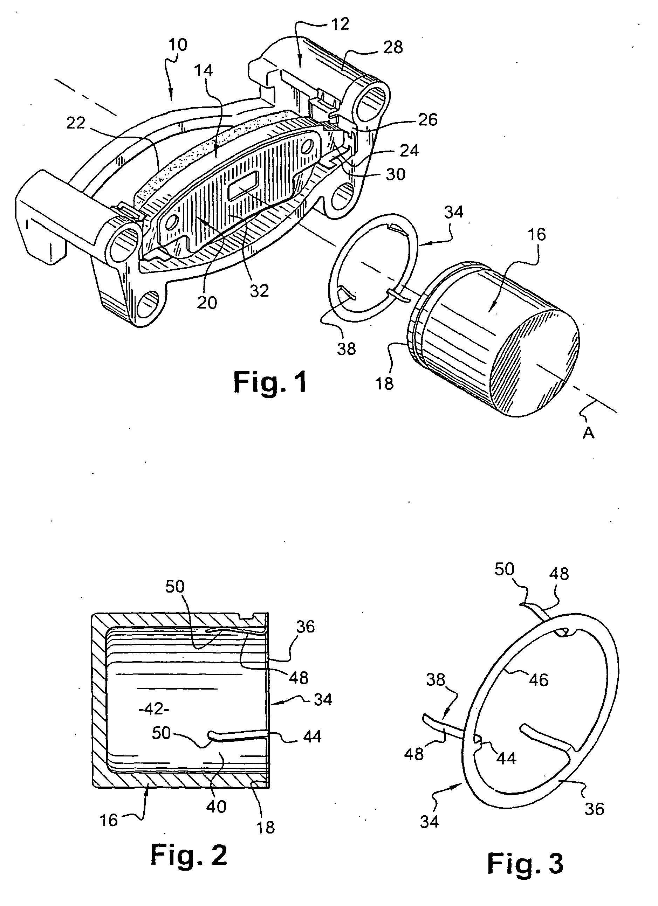

On a représenté à la figure 1 une partie d'un frein 10 à disque de véhicule automobile.

De manière connue, un frein 10 à disque comporte un disque (non représenté) contre chacune des faces opposées duquel un étrier 12 de frein est susceptible de serrer un patin 14 de frein. De manière connue, l'étrier 10 comporte au moins un piston axial 16 dont une extrémité 18 d'appui est susceptible de solliciter une face d'appui 20 du patin de frein 14 pour serrer une face de friction 22 opposée dudit patin 14 contre le disque lors d'un freinage.

De manière connue, chacune des extrémités transversales 24 opposées du patin 14 est montée coulissante avec jeu dans une glissière 26 associée d'une chape 28 de l'étrier 12 par l'intermédiaire d'un ressort 30 à lame interposé entre ladite extrémité transversale 24 et ladite glissière 26 associée. Ce ressort 30 permet d'autoriser un degré déterminé de mouvement du patin 14 dans la chape 28, généralement mais de manière on limitative, un mouvement de rotation autour d'un axe "A" sensiblement coaxial à celui du piston 16.

De manière connue, la face d'appui 20 du patin 14 comporte un revêtement 32 insonorisant qui est destiné à isoler thermiquement le piston 16 du patin 14 de frein pour éviter que les calories produites par le serrage du patin 14 contre le disque lors du freinage ne soient transmises au piston 16 de l'étrier, et, par son intermédiaire, au liquide de freinage.

Or, on a constaté qu'à l'usage, le piston 16 à tendance à pénétrer le revêtement 32 d'isolation de la face d'appui 20 du patin 14 de frein et devient de ce fait solidaire dudit revêtement 32, et donc du patin 14 de frein, ce qui empêche le patin 14 alors d'avoir la liberté de mouvement désirée.

Pour remédier à cet inconvénient, l'invention propose un frein à disque muni d'un moyen permettant de découpler le patin 14 du piston 16.

Sur la figure 1 est illustré, un frein 10 à disque du type décrit précédemment, comportant un élément 34 mobile est interposé entre l'extrémité d'appui 18 du piston et la face 20 d'appui du patin 14 de frein pour permettre un déplacement du patin 14 de frein lors du freinage à l'encontre d'au moins un ressort 30 afin de limiter les bruits de freinage.

Avantageusement, l'élément mobile 34 peut être fixé à la face 20 d'appui du patin 14 de frein, par tout procédé connu de l'état de la technique et notamment par collage.

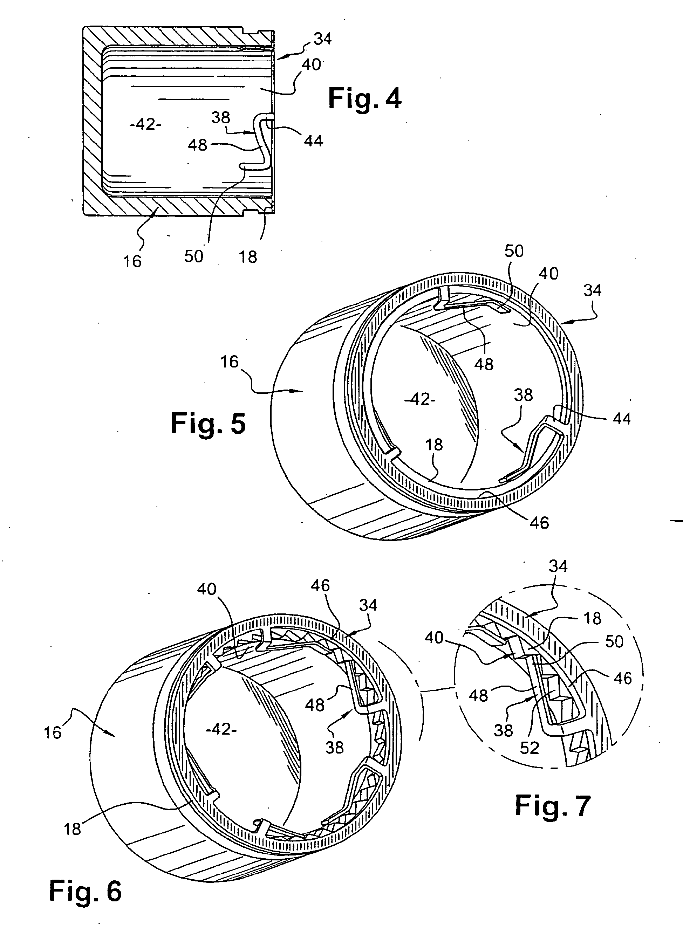

Comme l'illustrent plus particulièrement les figures 4 à 7, dans les modes de réalisation préférés de l'invention, le piston 16 est tubulaire, et de ce fait son extrémité 18 d'appui est annulaire.

Dans les modes de réalisation préférés de l'invention, l'élément 34 pivotant comporte une rondelle 36 qui est agencée sur l'extrémité d'appui 18 annulaire du piston 14 et qui est montée mobile par rapport au piston 14.

A cet effet, comme l'illustrent les figures 4 à 5, l'élément 34 pivotant comporte au moins trois pattes 38 sensiblement axiales qui s'étendent au contact d'une portée 40 sensiblement cylindrique du piston pour assurer le guidage de la rondelle 36.

Dans les modes de réalisation qui ont été représentés aux figures 4 à 5, la portée 40 sensiblement cylindrique est constituée d'une partie de l'alésage 42 du piston tubulaire et chaque patte 38 comporte une première extrémité 44 qui la lie au bord intérieur 46 d'un perçage central de la rondelle 36 et qui s'étend vers l'intérieur de l'alésage 42 du piston 16 tubulaire.

En variante (non représentée) la portée sensiblement cylindrique peut être agencée à la périphérie extérieure du piston tubulaire 16 sans changer la nature de l'invention. Dans ce cas, chaque patte comporte une première extrémité qui la lie au bord extérieur périphérique de la rondelle et qui s'étend vers l'extérieur de la périphérie du piston tubulaire 16.

Quelle que soit la manière dont est agencée la portée cylindrique du piston 16, chaque patte comporte une partie élastique intermédiaire 48 et une touche 50 de contact.

Il est connu comme représenté aux figures 2 et 3, que chaque patte 38 comporte une partie intermédiaire élastique 48 rectiligne comprise dans un plan radial et qui est destinée à fléchir pour permettre un glissement déterminé de la rondelle 36 sur l'extrémité d'appui 18 du piston 12.

Chaque patte comporte par ailleurs une seconde extrémité 50 comportant une touche de contact avec la portée cylindrique 40 du piston 14.

Selon un premier mode de réalisation de l'invention qui a été représenté aux figures 4 et 5, chaque patte 38 comporte une partie intermédiaire élastique 48 en forme de "S" comprise dans un plan sensiblement tangent au piston 12, pour permettre une rotation de la rondelle 36 sur l'extrémité d'appui 18 du piston 12.

Chaque patte 38 comporte aussi une seconde extrémité 50 comportant une touche de contact avec la portée 40 cylindrique du piston.

La forme de "S" de la partie 48 intermédiaire élastique permet de conférer une élasticité adéquate à la partie intermédiaire 48.

Selon une deuxième mode de réalisation (figures 6 et 7) sensiblement analogue au mode réalisation précédent qui a été représenté à la figure 3, chaque patte 38 comporte aussi une partie intermédiaire élastique 48 en forme de "S" comprise dans un plan sensiblement tangent au piston, et une seconde extrémité 50 comportant une touche de contact avec la portée 40 cylindrique du piston. La forme de "S" de la partie 48 intermédiaire élastique permet de conférer une élasticité adéquate à la partie intermédiaire 48.

Dans ce deuxième mode de réalisation, la portée cylindrique 40 du piston 16 comporte de surcroît des dents asymétriques 52 qui sont destinées à coopérer avec les secondes extrémités 50 formant touches de contact des pattes 38 pour former un cliquet ne permettant la rotation de la rondelle 36 que dans un sens déterminé et selon un pas déterminé.

Dans cette dernière configuration le patin 14 est donc susceptible de tourner par rapport au piston 16 lors de chaque freinage selon un sens déterminé et selon un pas déterminé, ce qui évite que le patin n'effectue un mouvement de rotation d'amplitude trop élevée amenant le ressort 30 en compression maximale. Cette configuration permet de maintenir un niveau de bruit réduit tout en conservant les caractéristiques d'élasticité du ressort à lame.

L'invention permet donc de proposer un frein à disque particulièrement silencieux.

## Revendications

1. Elément (34) destiné à être interposé entre une extrémité d'appui (18) d'un piston (12) de frein à disque et une face d'appui (20) d'un patin (14) de frein, l'élément (34) étant monté mobile par rapport au piston pour permettre un déplacement du patin (14) de frein lors du freinage afin de limiter les bruits de freinage, l'élement mobile comportant une rondelle (36) destinée à être agencée sur l'extrémité d'appui (18) annulaire du piston (12), l'élément mobile (34) comportant au moins trois pattes (38) destinées à s'étendre au contact d'une portée (40) sensiblement cylindrique du piston (12) pour assurer le guidage de la rondelle (36), **caractérisé en ce que** chaque patte (38) comporte une partie intermédiaire élastique (48) en forme de "S" destiné à être comprise dans un plan sensiblement tangent au piston (12) pour permettre une rotation de la rondelle (36) sur l'extrémité d'appui (18) du piston (12), et **en ce que** chaque patte (38) comporte une seconde extrémité (50) comportant une touche destiné à être en contact avec la portée cylindrique (40) du piston (12).

2. Elément selon la revendication précédente, **caractérisé en ce que** chaque patte (38) comporte une première extrémité (44) qui la lie au bord intérieur (46) d'un perçage de la rondelle (36) et qui s'étend vers l'intérieur de l'alésage (42) du piston (12) tubulaire.

3. Elément selon la revendication 2, **caractérisé en ce que** la portée sensiblement cylindrique est agencée à la périphérie extérieure du piston (12) tubulaire et **en ce que** chaque patte comporte une première extrémité qui la lie au bord extérieur périphérique de la rondelle (36) et qui s'étend vers l'extérieur de la périphérie du piston (12) tubulaire.

4. Elément selon l'une des revendications 2 ou 3, **caractérisé en ce que** chaque patte (38) comporte une partie intermédiaire élastique (48) rectiligne qui est comprise dans un plan radial et qui est destinée à fléchir pour permettre un glissement déterminé de la rondelle (36) sur l'extrémité d'appui (18) du piston (12), et **en ce que** chaque patte (38) comporte une seconde extrémité (50) comportant une touche destinée à être en contact avec la portée cylindrique (40) du piston (12).

5. Frein (10) à disque de véhicule automobile, du type qui comporte un étrier (12) de frein susceptible d'appliquer un patin (14) de frein sur une face d'un disque de frein, du type dans lequel l'étrier (12) comporte au moins un piston (16) axial dont une extrémité (18) d'appui est susceptible de solliciter une face d'appui (20) du patin (14) de frein pour serrer une face de friction (22) opposée dudit patin (14) contre le disque lors d'un freinage, et du type dans lequel chacune des extrémités transversales (24) opposées du patin (14) est montée coulissante avec jeu dans une glissière (26) associée d'une chape (28) de l'étrier (12) par l'intermédiaire d'un ressort (30) à lame interposé entre ladite extrémité transversale et ladite glissière (26) associée, **caractérisé en ce qu'**il comporte un élément (34) selon l'une quelconque des revendications précédentes, ledit élément (34) étant interposé entre l'extrémité d'appui (18) du piston (12) et la face d'appui (20) du patin (14) de frein pour permettre un déplacement du patin (14) de frein lors du freinage à l'encontre d'au moins un des ressorts (30) afin de limiter les bruits de freinage.

6. Frein à disque selon la revendication précédente ensemble la revendication 1 ou 2 **caractérisé en ce que** le piston comporte une portée (40) sensiblement cylindrique est constituée d'une partie de l'alésage (42) du piston (12) tubulaire.

7. Frein (10) à disque selon la revendication précédente, **caractérisé en ce que** la portée (40) cylindrique du piston comporte des dents (52) asymétriques qui sont destinées à coopérer avec les secondes extrémités (50) formant touches de contact des pattes (38) pour former un cliquet ne permettant la rotation de la rondelle (36) que dans un sens déterminé et selon un pas déterminé.

8. Frein (10) à disque selon l'une quelconque des revendications 5 à 7 **caractérisé en ce que** l'élément mobile (34) est fixé à la face d'appui (20) du patin (14) de frein.

## Claims

1. Element (34) designed to be interposed between a bearing end (18) of a disc brake piston (12) and a bearing face (20) of a brake pad (14), the element (34) being mounted so as to move relative to the piston in order to allow a movement of the brake pad (14) during braking in order to limit the braking noises, the moveable element comprising a shim (36) designed to be arranged on the annular bearing end (18) of the piston (12), the movable element (34) comprising at least three lugs (38) designed to extend in contact with a substantially cylindrical bearing surface (40) of the piston (12) in order to guide the shim (36), **characterized in that** each lug (38) comprises an S-shaped elastic intermediate portion (48) designed to be included in a plane substantially tangential to the piston (12) in order to allow the shim (36) to rotate on the bearing end (18) of the piston (12), and **in that** each lug (38) comprises a second end (50) comprising a contact portion designed to be in contact with the cylindrical bearing surface (40) of the piston (12).

2. Element according to the preceding claim, **characterized in that** each lug (38) comprises a first end (44) which is connected to the inner edge (46) of a piercing of the shim (36) and which extends towards to the inside of the bore (42) of the tubular piston (12).

3. Element according to Claim 2, **characterized in that** the substantially cylindrical bearing surface is arranged on the outer periphery of the tubular piston (12) and **in that** each lug comprises a first end which is connected to the outer peripheral edge of the shim (36) and which extends towards the outside of the periphery of the tubular piston (12).

4. Element according to one of Claims 2 and 3, **characterized in that** each lug (38) comprises a rectilinear elastic intermediate portion (48) which is included in a radial plane and which is designed to bend in order to allow a determined sliding of the shim (36) on the bearing end (18) of the piston (12), and **in that** each lug (38) comprises a second end (50) comprising a contact portion designed to be in contact with the cylindrical bearing surface (40) of the piston (12).

5. Motor-vehicle disc brake (10) of the type which comprises a brake caliper (12) capable of pressing a brake pad (14) onto a face of a brake disc, of the type in which the caliper (12) comprises at least one axial piston (16) of which a bearing end (18) is capable of acting on a bearing face (20) of the brake pad (14) in order to clamp an opposite friction face (22) of the said pad (14) against the disc during braking, and of the type in which each of the opposite transverse ends (24) of the pad (14) is mounted so as to slide with clearance in a runner (26) associated with a yoke (28) of the caliper (12) by means of a leaf spring (30) interposed between the said transverse end and the said associated runner (26), **characterized in that** it comprises an element (34) according to any one of the preceding claims, the said element (34) being interposed between the bearing end (18) of the piston (12) and the bearing face (20) of the brake pad (14) in order to allow a movement of the brake pad (14) during braking against at least one of the springs (30) in order to limit the braking noises.

6. Disc brake according to the preceding claim and Claim 1 or 2, **characterized in that** the piston comprises a substantially cylindrical bearing surface (40) which consists of a portion of the bore (42) of the tubular piston (12).

7. Disc brake (10) according to the preceding claim, **characterized in that** the cylindrical bearing surface (40) of the piston comprises asymmetrical teeth (52) which are designed to interact with the second ends (50) forming contact portions of the lugs (38) in order to form a ratchet allowing the shim (36) to rotate only in a determined direction and at a determined pitch.

8. Disc brake (10) according to any one of Claims 5 to 7, **characterized in that** the moveable element (34) is fixed to the bearing face (20) of the brake pad (14).

## Patentansprüche

1. Element (34) zur Anordnung zwischen einem Anlageende (18) eines Kolbens (12) einer Scheibenbremse und einer Anlagefläche (20) eines Bremsbelags (14), wobei das Element (34) beweglich bezüglich des Kolbens angebracht ist, um eine Verschiebung des Bremsbelags (14) beim Bremsen zu gestatten, um die Bremsgeräusche zu begrenzen, wobei das bewegliche Element einen Ring (36) aufweist, der auf dem ringförmigen Anlageende (18) des Kolbens (12) angeordnet werden soll, wobei das bewegliche Element (34) mindestens drei Ansätze (38) aufweist, die sich im Kontakt mit einer im Wesentlichen zylindrischen Auflagefläche (40) des Kolbens (12) erstrecken sollen, um die Führung des Rings (36) zu gewährleisten, **dadurch gekennzeichnet, dass** jeder Ansatz (38) einen elastischen, "S"-förmigen Zwischenteil (48) aufweist, der in einer im Wesentlichen tangential zum Kolben (12) verlaufenden Ebene aufgenommen werden soll, um eine Drehung des Rings (36) auf dem Anlageende (18) des Kolbens (12) zu gestatten, und dass jeder Ansatz (38) ein zweites Ende (50) aufweist, das eine Taste aufweist, die mit der zylindrischen Auflagefläche (40) des Kolbens (12) in Kontakt stehen soll.

2. Element nach dem vorhergehenden Anspruch, **dadurch gekennzeichnet, dass** jeder Ansatz (38) ein erstes Ende (44) aufweist, das sich mit dem Innenrand (46) einer Bohrung des Rings (36) verbindet und das sich in das Innere der Bohrung (42) des röhrenförmigen Kolbens (12) erstreckt.

3. Element nach Anspruch 2, **dadurch gekennzeichnet, dass** die im Wesentlichen zylindrische Auflagefläche am Außenumfang des röhrenförmigen Kolbens (12) angeordnet ist und dass jeder Ansatz ein erstes Ende aufweist, das ihn mit dem Außenumfangsrand des Rings (36) verbindet und das sich vom Umfang des röhrenförmigen Kolbens (12) nach außen erstreckt.

4. Element nach Anspruch 2 oder 3, **dadurch gekennzeichnet, dass** jeder Ansatz (38) einen geradlinigen, elastischen Zwischenteil (48) aufweist, der in einer radialen Ebene enthalten ist und durchbiegen soll, um ein bestimmtes Gleiten des Rings (36) auf dem Anlageende (18) des Kolbens (12) zu gestatten, und dass jeder Ansatz (38) ein zweites Ende (50) aufweist, das eine Taste aufweist, die mit der zylindrischen Auflagefläche (40) des Kolbens (12) in Kontakt stehen soll.

5. Scheibenbremse (10) für ein Kraftfahrzeug jener Art, die einen Bremssattel (12) aufweist, der einen Bremsbelag (14) an eine Fläche einer Scheibenbremse drücken kann, jener Art, bei der der Sattel (12) mindestens einen axialen Kolben (16) aufweist, von welchem ein Anlageende (18) eine Anlagefläche (20) des Bremsbelags (14) beaufschlagen kann, um beim Bremsen eine gegenüberliegende Reibfläche (22) des Belags (14) gegen die Scheibe zu spannen, und jener Art, bei der jedes der gegenüberliegenden Querenden (24) des Belags (14) mittels einer zwischen dem Querende und einer zugehörigen Gleitführung (26) angeordneten Blattfeder (30) verschiebbar mit Spiel in der zugehörigen Gleitführung (26) eines Gabelkopfs (28) des Sattels (12) angebracht ist, **dadurch gekennzeichnet, dass** sie ein Element (34) nach einem der vorhergehenden Ansprüche aufweist, wobei das Element (34) zwischen dem Anlageende (18) des Kolbens (12) und der Stützfläche (20) des Bremsbelags (14) angeordnet ist, um ein Verschieben des Bremsbelags (14) beim Bremsen entgegen mindestens einer der Federn (30) zu gestatten, um die Bremsgeräusche zu begrenzen.

6. Scheibenbremse nach dem vorhergehenden Anspruch und Anspruch 1 oder 2, **dadurch gekennzeichnet, dass** der Kolben eine im Wesentlichen zylindrische Auflagefläche (40) aufweist, die aus einem Teil der Bohrung (42) des röhrenförmigen Kolbens (12) besteht.

7. Scheibenbremse (10) nach dem vorhergehenden Anspruch, **dadurch gekennzeichnet, dass** die zylindrische Auflagefläche (40) des Kolbens asymmetrische Zähne (52) aufweist, die mit den zweiten Enden (50) zusammenwirken sollen, die Kontaktschalter der Ansätze (38) bilden, um eine Sperrklinke zu bilden, die die Drehung des Rings (36) nur in einer bestimmten Richtung und gemäß einem vorbestimmten Schritt gestattet.

8. Scheibenbremse (10) nach einem der Ansprüche 5 bis 7, **dadurch gekennzeichnet, dass** das bewegliche Element (34) an der Anlagefläche (20) des Bremsbelags (14) befestigt ist.
